# EUROPEAN PATENT APPLICATION

(11) **EP 2 242 172 A1**
(43) Date of publication of application: **20.10.2010**
(21) Application number: 09157852.6
(22) Date of filing: 14.04.2009
(51) Int. Cl.: H02M 7/538, H02M 7/5387

(54) **Inverter having only a one bit feedback signal for controlling three switching states**

(71) Applicant: NXP B.V., 5656 AG Eindhoven (NL)
(72) Inventor: Boswinkel, Hendrik, J, Redhill, Surrey RH1 1DL (GB)
(74) Representative: Hardingham, Christopher Mark

(57) **Abstract**

An inverter used to drive a cold cathode fluorescent tube 36 has isolated primary (100) and secondary (200) sides. A controller (40) on the secondary side outputs a signal to a driver (26) on the primary side which drives switching transistors (14,16). To communicate using only a single isolating connection (46) and a signal which may be high or low, the driver (26) retains the signal from controller (40) for a memory time, and operates in a first state when the binary signal has been low for at least the memory time, operates in a second state when the binary signal is high, and operates in a third state when the binary signal has been low for less than the memory time. Different arrangements of low and high signals may be used.

## Description

The invention relates to an inverter, i.e. a switching power supply, with mains separation and a method of using such an supply.

There are a number of applications for power supplies. One such application is for transmissive liquid crystal displays. Typically, a transmissive liquid crystal display (LCD) panel is mounted in front of a light source, often known as a backlight unit (BLU). Typically, such BLUs contain cold cathode fluorescent lamps that need to be supplied with an alternating voltage typically in the range 600V to 1200V, often around 1000V.

The first mass application for such panels was in laptop computers with relatively small screens, typically 14 inch and generally no more than 17 inch. In such cases, the BLUs were generally driven from a DC battery with a voltage around 12V to 24V through an inverter.

When LCD displays became used as computer monitors or as televisions, then an input mains voltage, whether 110V or 230V, was typically rectified and converted to a voltage around 12V to 24V. Then, an inverter was used to generate the 600V to 1200V ac required to drive the cold cathode fluorescent lamps.

As the screen sizes of LCD displays increases, the DC supply current of the inverter grows quadratically with screen size resulting in high currents and high ohmic losses.

Of course, the need for suitable power supplies is not limited to this application and there is great general interest in suitable circuits for efficiently producing the required ac.

In particular, the inverter may be driven directly from the rectified mains voltage without an intermediate low voltage. However, the use of an inverter directly driven by a rectified mains voltage introduces the requirement of mains separation, i.e. the dc isolation of the secondary side of the inverter from the mains.

A circuit addressing this issue is proposed in US2006/0284568. The circuit converts input AC to a relatively high voltage direct current signal (370V to 420V) in a primary side and uses an inverter circuit to drive backlight lamps in a secondary side. In this circuit, the primary side is separated from the secondary side using a transformer and a photo-coupler circuit on the reverse feedback path. The circuit has the controller and driver on the primary side, and a feedback circuit on the secondary side. It is not, however clear from this patent application how the analogue current value measured in the secondary side is transmitted back to the controller through a single photo-coupler.

According to the invention there is provided an inverter according to claim 1.

By providing for a memory time, it is possible for the driver to drive a high side transistor and a low side transistor into three states, a first state with both transistors off, a second state with the high-side transistor on, and a third state with the low-side transistor on. This is achieved with a single on-off binary signal. The binary signal can accordingly be transmitted through a single isolation device such as a single optocoupler.

The load may be a cold cathode fluorescent lamp.

In an embodiment, the memory time is dependent on the length of time that the communications line has been in the other one of first and second states to the predetermined state.

In one implementation, a full bridge circuit is used. In this case, the circuit includes a first pair of high and low side transistors and a second pair of high and low side transistors, each pair being driven by a separate binary signal.

For a better understanding of the invention, embodiments will now be described, purely by way of example, with reference to the accompanying drawings, in which:
Figure 1 illustrates a first embodiment of the invention;
Figure 2 illustrates the signal level on the communication line and the state of the switches;
Figure 3 illustrates output in the first embodiment of the invention;
Figure 4 illustrates a second embodiment of the invention;
Figure 5 illustrates a third embodiment of the invention using a resonant converter; and
Figure 6 illustrates a fourth embodiment of the invention using a full bridge configuration.

The Figures are schematic and not to scale. Like or similar components are given the same reference numbers in different figures, and the description related to repeated components is not necessarily repeated. Further, some of the Figures are simplified for clarity.

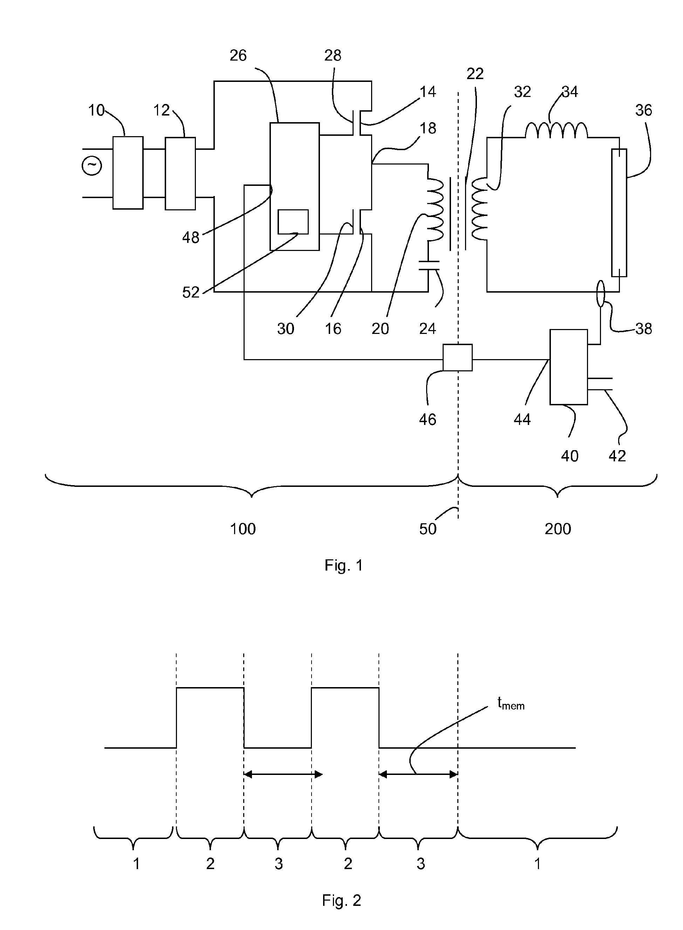

Referring to Figure 1, a circuit according to the first embodiment of the invention is an inverter circuit with a primary side 100 and a secondary side 200.

On the primary side 100, rectifier 10 has outputs connected to power factor correction (PFC) stage 12 which are in turn connected across a pair of transistors in series, a high side transistor 14 in series with low side transistor 16. The central node 18 between high and low side transistors 14, 16 is connected to the primary winding 20 of transformer 22 and then through the primary winding 20 to capacitor 24. Driver circuit 26 is connected to the gate 28 of the high side transistor 14 and to the gate 30 of the low side transistor 16.

On the secondary side, the secondary winding 32 of transformer 22 is connected through an inductor 34 to the load, a cold cathode fluorescent tube 36. In an alternative embodiment, the external inductor 34 is omitted, and the secondary winding 32 itself is made lossy.

A sense coil 38 is arranged to sense the current passing through the cold cathode fluorescent tube 36, the sense coil 38 being connected to controller 40. The controller 40 has control inputs 42 and a control output 44 which is connected through optical isolator 46 to an input 48 on the driver 26 in the primary side.

The primary 100 and secondary 200 sides are accordingly isolated across mains separation 50, with the power being transmitted forward across the mains separation 50 by transformer 22 and feedback transmitted back across the mains separation by optical isolator 46.

In use, there are four possible states of the high and low side transistors 14,16. In an idle state (state one), both transistors are switched off. In a second state (state two), the low side transistor 16 is off and the high side transistor 14 on. In a third state (state three), the low side transistor 16 is on and the high side transistor 16 off. A fourth state has both high and low side transistors on, and is to be avoided since this state acts effectively as a short circuit.

Accordingly, the controller 40 needs to transmit a signal back to the driver 26 indicating which of the three states is required.

One way of achieving this would be to provide two optical couplers 46 and two one-bit signals across mains separation 50, for example one signal to control the high side transistor 14 and one signal to control the low side transistor 16.

However, the inventor has realised that the difficulty and expense of such a solution can be avoided and only a single binary signal (with high and low states) used to control the high and low side transistors 14,16 by defining a memory time, and defining state one (the idle state) to exist after the binary signal has been in one of the high and low states for at least the memory time. If the binary signal has changed within the memory time, then the binary signal defines either state two or state three depending on the state of the binary signal. In this embodiment, the memory time is a predetermined constant.

Figure 2 illustrates this; the graph shows the binary signal and the corresponding state of the system, where 1 indicates state one, 2 indicates state two and 3 indicates state three. The system starts in idle state (state one) with the binary signal low. The binary signal then switches to high, indicating state two, and then low again, indicating state three. The binary signal stays low for less time than the memory time, tₘₑₘ, before going high to indicate state two again. Then, the binary signal goes low again, indicating state three. This time, however, the binary signal stays low for more than the memory time tₘₑₘ and so after the expiry of the memory time tₘₑₘ the binary signal indicates state one. In this way, a single binary signal with two values can be used to communicate all three required states.

In summary, state one is indicated by the binary signal being in a predetermined one of its two states - in the example low - for at least the memory time. At times when the binary signal is in this predetermined one of its two states - in the example low - for less than the memory time the high and low side transistors are driven in a predetermined one of state two and state three.

The inventors have realised that this is possible because in general the idle state (state one) lasts for a longer time than state two or state three.

The interpretation of the signal by driver 26 is achieved by a memory cell 52 which stores the state of the binary signal input to driver 26 on input 48 for the memory time.

In use, an ac mains signal is applied to rectifier 10 and this is rectified and passed through PFC stage 12 to supply a voltage of approximately 400V dc across the high and low side transistors 14,16. The signal is switched by high and low side transistors 14, 16 under control of driver 26 in turn under the control of controller 40 to supply a switched current through the primary winding 20 of transformer 22 and to induce a current in the secondary winding 32 on the secondary side. The currrent drives the load, the cold cathode fluorescent tube 36.

The current through the load is sensed on sense coil 38 which is used as an input to controller 40 which supplies a binary feedback signal having two states (high and low) back through optical isolator 46 to input 48 of driver 26.

By providing the controller on the secondary side it is easy to fully utilise the exact current measured on sense coil 38 without the need to transmit an analogue signal or a high definition binary signal representing the measured current back to the primary side through optical coupler 46.

Those skilled in the art will realise that modifications may be made to the above. Instead of the optical isolator 46, alternative isolation components may be used such as a two-winding transformer. Other current sensing components may be used instead of sense coil 38.

Further, in the embodiment described the idle state is indicated by the binary signal being low for the memory time. However, in an alternative embodiment, the idle state can be indicated by the binary signal being high for the memory time.

In the embodiment described above, the memory time is a constant.

However, in an alternative embodiment, the memory time varies, depending on the length of time the binary signal is held in the other one of the two states from the predetermined state. In an example, in the case that the binary signal is held low for the memory time to indicate state one, then the memory time may depend on the time that the binary signal was previously held high. Typically, the memory time will be set to be a little longer than the time the binary signal was previously in its high state.

In this way, the system can be switched off by reducing the time of each successive high state in a number of successive cycles to reduce the memory time before finally switching the circuit into the idle state. When the circuit is switched out of the idle state again, a higher initial value of memory time can be used.

This can reduce the noise in the transformer, especially when switching the inverter off and on. This may be needed for some applications. Consider the case that the circuit is used to drive an LCD backlight. To dim the backlight, digital dimming has some advantages. In this approach the lamps of the backlight are switched off and on at high speed, say 200Hz. The light can be reduced to a lower level than by using analogue dimming and the colour remains constant.

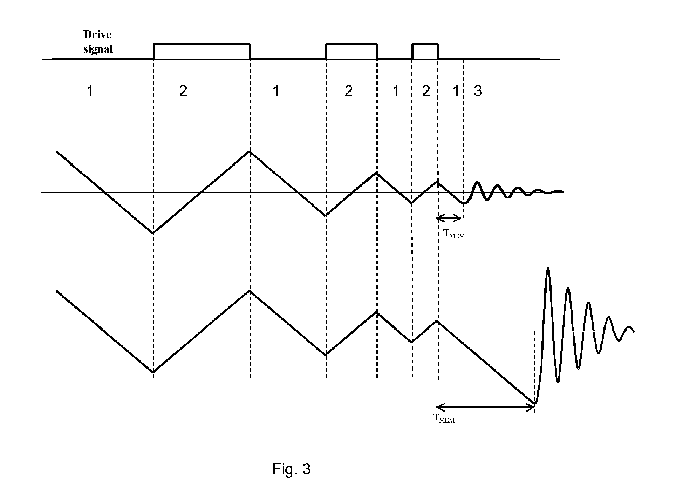

For this and other applications, the switching off and on of the inverter needs to be done in a smooth way. Figure 3 illustrates the square wave signal output on output node 18 (top graph) and the current in the primary coil 20 in two cases with different tₘₑₘ, the lower graph having a longer tₘₑₘ at the time the circuit is finally switched into the idle state.

When the inverter is switched off, the initial state of the inverter (up until time tₘₑₘ) has the low side transistor on hence driving an output on the output node 18. This drive causes a current through the primary coil 20, so the longer the low side transistor is on the more current builds up in the primary coil 20. After the time tₘₑₘ the high and low side transistors are switched off and the current decays with a "ringing" type oscillation. Thus, the longer the time period tₘₑₘ at the moment the inverter is switched off, the larger the current that has built up in the primary coil 20 and so the larger the ringing.

This means that if tₘₑₘ can be varied the inverter can be switched off by reducing the time period that the drive signal is on until the signal is finally switched off. In other words, the controller 40 is arranged to switch the inverter into the idle state over a plurality of cycles by reducing the time the binary signal is high over successive cycles to reduce tₘₑₘ before ending the cycles to switch the inverter into the idle state.

Thus, in the embodiment with varying tₘₑₘ, the value of tₘₑₘ can be reduced to a lower or minimal value before finally switching the inverter off. In this way, the ringing is reduced.

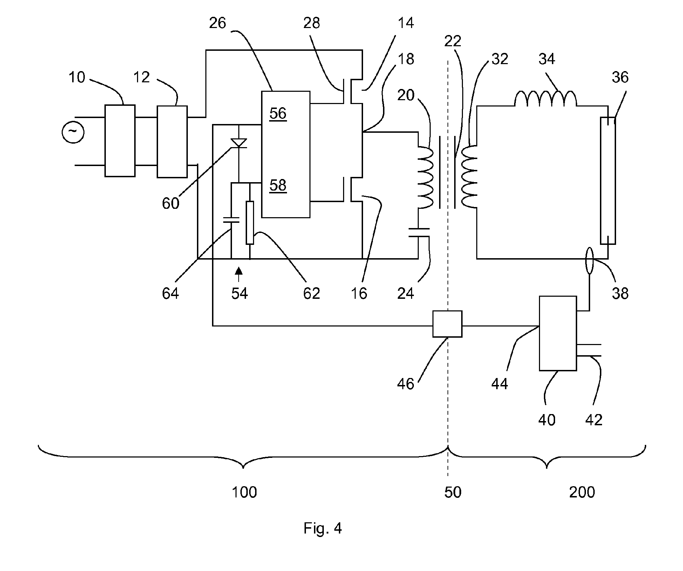

Figure 4 illustrates an alternative embodiment in which, instead of a memory cell 52 integrated into driver 26, the driver 26 includes external circuit components 54 having a time constant corresponding to the memory time is used.

The driver has a pair of inputs, a first input 56 directly connected to the optical isolator 46, and a second input 58 connected to the first input 56, and hence the optical isolator 46, through diode 60. An RC circuit with a resistor 62 and capacitor 64 connects the second input to the low side.

When the signal on input 56 goes low, the voltage on capacitor 64 discharges with a time constant determined by the RC time constant of resistor 62 and capacitor 64.

The driver 26 in this embodiment compares the voltage on the second input 58 with a reference voltage V_{ref}, and whilst the signal on the first input 56 is low but the voltage on the second input 58 is above the reference voltage V_{ref}, the driver drives the transistors in state three with the low side transistor 16 on and the high side transistor 14 off.

After the voltage on the second input 58 falls past the reference voltage V_{ref}, with the first input staying low, the driver drives the transistors in state one with both the low side transistor 16 and the high side transistor 14 off.

In this way, the time constant of the RC circuit of resistor 62 and capacitor 64 together with the relative sizes of the reference voltage and the signal voltage determine the memory time.

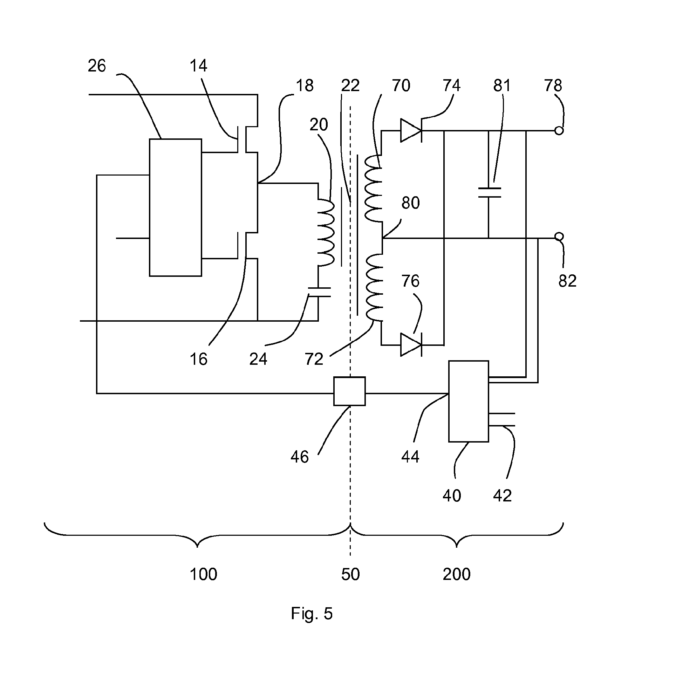

Figure 5 illustrates an alternative arrangement using an LLC resonant converter using the same technique as the embodiments above.

On the secondary side 200 the converter has a pair of secondary windings 70,72 each of which is connected through a respective output diode 74,76 to a first dc voltage output 78. The secondary windings are connected together at a centre node 80 connected to a second dc voltage output 82. The output voltage is delivered across first and second dc voltage outputs 78, 82. The controller 40 is connected to the first and second dc voltage outputs 78, 82. Smoothing capacitor 81 is provided across the voltage outputs 78, 82.

In use, the voltage across the first and second dc voltage outputs is determined and used to generate the feedback signal.

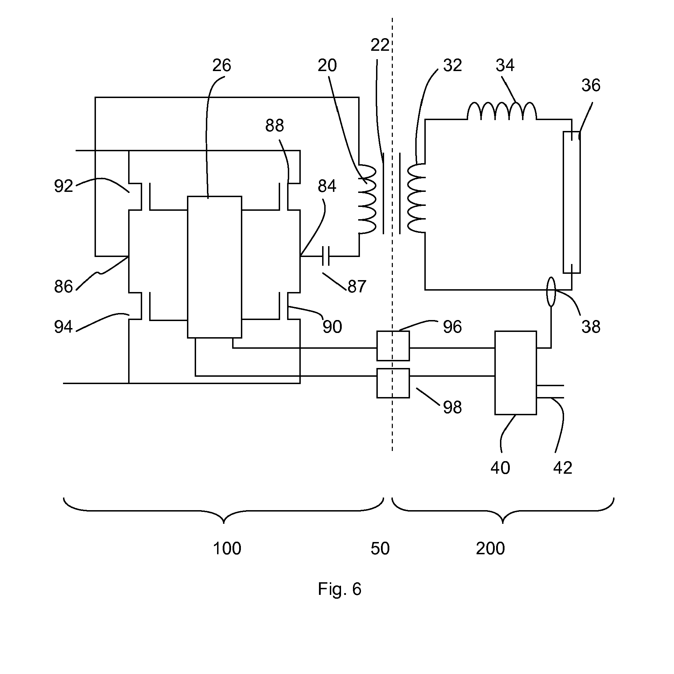

The embodiments above are half bridge arrangements in which there is a single high side transistor and a single low side transistor. The invention is also applicable to a full bridge arrangements as illustrated in Figure 6.

In this arrangement, the primary winding 20 is connected between first 84 and second 86 primary side output nodes in series with capacitor 87. The first primary side output node 84 is connected between a first high side transistor 88 and a first low side transistor 90 and the second primary side output node 86 is connected between a second high side transistor 92 and a second low side transistor 94.

In this case, each of the first and second bridge circuit needs a separate binary control line from the controller 40 on the secondary side 200 and so a first optical isolator 96 is used for a first binary signal to control the first high side transistor and the first low side transistor and a second optical isolator 98 is used for a second binary signal to control the second high side transistor and the second low side transistor.

In use, each of the first and second binary signals controls the respective transistors in exactly the same way as in the half bridge embodiments above.

Of course, the first and second binary signals will control the respective transistors differently, as appropriate for a full bridge rectifier, so the controller 40 will need to output different control signals. In particular, the output voltage may now be adjusted by adjusting the phase between the first and second binary signals as is known to those skilled in the art.

It will be appreciated by those skilled in the art that the high and low states of the binary signal can be interchanged, and indeed rearranged; for example, the binary signal being high may correspond to a state with the low side transistor on.

## Claims

1. An inverter, comprising:
a primary side (100) including a high side transistor (14,88,92) in series with a low side transistor (16,90,94), having a primary side output node (18,84,86) between the high side transistor and the low side transistor and a driver (26) for driving the high and low side transistors;
a secondary side for driving a load (36), the secondary side including a controller (40) having a feedback output, the controller being arranged to output a binary feedback signal having first and second states on the feedback output based on the electrical supply to the load;
an isolating transformer (22) between the output node of the primary side and the secondary side; and
an isolating connection (46) between the feedback output on the secondary side and the driver on the primary side;
**characterised in that** the driver (26) is arranged to retain the state of the feedback output for a memory time, wherein the driver is arranged:
to switch off the high side transistor (14,88,92) and to switch on the low side transistor (16,90,94) to pass current when the binary feedback signal is in the first state until the binary feedback signal has been in the first state for the memory time;
to switch off the low side transistor (16,90,94) and switch on the high side transistor (14,88,92) when the binary feedback signal changes from the first state to the second state in the memory time, and
to switch both the high side transistor (14,88,92) and the low side transistor (16,90,94) off when the binary feedback signal remains in the first state for the memory time.

2. An inverter according to claim 1, wherein the primary side further comprises:
a rectifier (10) for converting ac input power into a dc voltage across the high and low side transistors.

3. An inverter according to claim 2, further comprising a power factor correction stage (12) between the rectifier and the high and low side transistors.

4. An inverter according to any preceding claim wherein the driver has first and second inputs (56,58), the first input (56) being connected to the isolating connection (46) and the second input (58) being connected through a diode (60) to the first input and connected to a circuit (62,64) with predetermined time constant, wherein the memory time is determined by the time the voltage at the second input reaches a predetermined voltage after the binary signal changes to the first state.

5. An inverter according to any of claims 1 to 3 wherein the memory time is dependent on the length of time that the binary signal has been in the second state.

6. An inverter according to claim 5 wherein the controller (40) is arranged to enter an idle state over a plurality of cycles, by reducing the time that the binary signal is in the second state over the plurality of cycles before entering the first state.

7. An inverter according to any preceding claim wherein
the primary stage includes a first high side transistor (88), a first low side transistor (90), a second high side transistor (92) and a second low side transistor (94);
a primary winding (20) of the isolating transformer (22) is connected between a first output node (84) and a second output node (86) through a capacitor (87);
the first output node (84) is arranged between the first high side transistor (88) and the first low side transistor (90);
the second output node (86) is arranged between the second high side transistor (92) and the second low side transistor (94); and
the isolating connection (46) includes a first isolating transformer (96) for a binary signal for controlling the first high side transistor (88) and the first low side transistor (90) and a second isolating transformer (98) for controlling the second high side transistor (92) and the second low side transistor (94).

8. An inverter according to any preceding claim wherein the isolating connection is an opto-isolator (46).

9. A backlight device comprising an inverter according to any preceding claim and further comprising a cold cathode fluorescent lamp (36) connected on the secondary side as the load.

10. A method of operating an inverter having a primary side (100) including a high side transistor (14,88,92) in series with a low side transistor (16,90,94), having a primary side output node (18) between the high side transistor and the low side transistor and a driver (26) for driving the high and low side transistors; and an isolated secondary side (200) and a controller (40) having a feedback output (44),
the method comprising:
measuring the electrical supply to a load (36) on the secondary side;
outputting from the controller (40) a binary feedback signal based on the measured electrical supply, the binary feedback signal having first and second states on the feedback output (44) through an isolation device (46);
receiving the binary feedback signal in the driver (26);
retaining the state of the binary feedback signal in the driver (26) for a memory time;
switching off the high side transistor (14,88,92) and switching on the low side transistor (16,90,94) to pass current when the binary feedback signal is in the first state until the binary feedback signal has been in the first state for the memory time;
switching off the low side transistor (16,90,94) and switching on the high side transistor (14,88,92) when the binary feedback signal changes from the first state to the second state in the memory time, and
switching both the high side transistor (14,88,92) and the low side transistor (16,90,94) off when the binary feedback signal remains in the first state for the memory time.

11. A method according to claim 10, wherein the driver has first and second inputs (56,58), the first input (56) being connected to the isolating connection and the second input (58) being connected through a diode to the first input and connected to a circuit with predetermined time constant, the method further comprising determining the memory time by the time the voltage at the second input reaches a predetermined voltage after the binary signal changes to the first state.

12. A method according to claim 10 or 11 wherein the memory time is dependent on the length of time that the binary feedback signal has been in the second state.

13. A method according to claim 12 wherein the memory time is a predetermined time longer than the length of time that the binary feedback signal was been in the second state in the last cycle.

14. A method according to claim 13 including entering an idle state over a plurality of cycles, by reducing the time that the binary signal is in the said second states to the predetermined state over the plurality of cycles before entering the first state.

15. A method according to any of claims 10 to 14 for operating an inverter having first high side transistor (88) and a first low side transistor (90) and a second high side transistor (92) and a second low side transistor (94); the method comprising:
outputting from the controller (40) first and second binary feedback signals based on the measured current, each binary feedback signal having first and second states on the feedback output (44) through respective first and second isolators (96,98);
switching the first high and low side transistors (88,90) on the basis of the first binary signal; and
switching the second high and low side transistors (92,94) on the basis of the second binary signal.
